# EUROPÄISCHE PATENTSCHRIFT

(11) **EP 3 177 846 B1**
(45) Veröffentlichungstag und Bekanntmachung des Hinweises auf die Patenterteilung: **27.03.2019**
(21) Anmeldenummer: 16726505.7
(22) Anmeldetag: 24.05.2016
(51) Int. Cl.: F16D 69/02, F16D 65/08, F16D 69/04

(54) **VERFAHREN ZUR BESANDUNG VON TROMMELBREMSBELÄGEN**
METHOD FOR APPLYING SAND TO DRUM BRAKE LININGS
PROCÉDÉ D'APPLICATION DE SABLE SUR DES GARNITURES DE FREIN À TAMBOUR

(30) Priorität: 03.06.2015 DE 102015108770
(43) Veröffentlichungstag der Anmeldung: 14.06.2017
(73) Patentinhaber: TMD Friction Services GmbH, 51381 Leverkusen (DE)
(72) Erfinder: ROHRBERG, Bernd, 45359 Essen (DE); ROTHMANN, Werner, 45134 Essen (DE); WAPPLER, Dieter, 51519 Odenthal (DE); MAUS, Dominik, 51381 Leverkusen (DE)
(74) Vertreter: Müller, Eckhard
(86) Internationale Anmeldenummer: PCT/EP2016/061645
(87) Internationale Veröffentlichungsnummer: WO 2016/193056

(56) Entgegenhaltungen:
- FR-A- 1 255 831
- US-A- 1 890 735
- US-A- 5 083 650
- US-A1- 2007 056 816

## Beschreibung

Die vorliegende Erfindung betrifft ein Verfahren zu Besandung von Trommelbremsbelägen, insbesondere ein umweltfreundliches und kostengünstiges Verfahren zu deren Herstellung.

Eine Trommelbremse umfasst grundsätzlich eine Bremsbacke, genauer eine linke und eine rechte Bremsbacke, auf der der eigentliche Reibbelag, im Folgenden Trommelbremsbelag genannt, befestigt ist. Die Befestigung des Reibbelages kann nach verschiedenen Verfahren bzw. mit verschiedenen Mitteln erfolgen, wobei die gängigste Methode das Aufnieten des Reibbelages auf die Bremsbacke bzw. Bremsbacken ist.

Es hat sich gezeigt, dass im Bremsbetrieb, aufgrund der hohen mechanischen Belastung, die auf den Bremsbelag einwirkt, die Haftung oder der Haftreibwert zwischen Bremsbacke und dem eigentlichen Reibbelag nicht immer ausreichend ist und es unter Umständen zu einem Abscheren des Reibbelags von der Bremsbacke bei hohen Bremsmomenten kommen kann. Da dies ein potentielles Sicherheitsrisiko darstellt und gleichzeitig eine Verkürzung der Standzeit einer Trommelbremse und damit eine Erhöhung der laufenden Betriebskosten bedeutet, sind im Stand der Technik entsprechende Problemlösungen beschrieben.

Eine solche Lösung umfasst die Besandung der Innenfläche des Trommelbremsbelages, d. h. der Fläche über die der Reibbelag mit der Bremsbacke, z. B. durch Vernieten, verbunden ist. Besandung bedeutet, dass die Innenfläche oder der Innenradius (der Bremsbacke zugewandt) mit einem Reibkorn zusätzlich beschichtet wird. Der Zweck dieser Beschichtung besteht darin, den Haftreibwert zwischen dem Reibbelag und der Bremsbacke zu erhöhen und dadurch ein Abscheren des Reibbelages von der Bremsbacke bei hohen Bremsmomenten zu verhindern.

Um eine Haftung des Reibkorns (z. B. Aluminiumoxid/Korund, Siliziumdioxid) auf der Reibbelagoberfläche zu gewährleisten, wird bei den im Stand der Technik bestehenden Verfahren die zu beschichtende Oberfläche mit einem stark lösemittelhaltigen Kleber besprüht. Bedingt durch den Anteil an organischen Lösemittel ist das Verfahren stark umweltbelastend. So muss z. B. lösemittelhaltige Abluft aus der Sprühkabine und solche, die bei der späteren Trocknung der Kleberschicht entsteht, aufwendig und zum Teil mit hohem energetischen Aufwand für eine notwendige Nachverbrennung entsorgt werden. Weiterer Entsorgungsaufwand fällt für die in der Anlage sich bildenden und abscheidenden Rückstände an. Diese Rückstände entstehen nicht zuletzt durch den bei den bekannten Sprühverfahren unvermeidlich entstehenden sogenannten "Overspray", der über dies auch zu einem höheren und damit kostenintensiven Materialmehrverbrauch führt.

Es sind zwar grundsätzlich Beschichtungsverfahren für Bremsbeläge, mit Beschichtung der reibseitigen Belagoberfläche bekannt, bei denen organische Lösungsmittel weitgehend durch Wasser ersetzt werden, allerdings wird damit das genannte Problem, das durch den "Overspray", das heißt Beschichtungsmaterial, das nicht auf der Belagoberfläche abgeschieden wird, entsteht, nicht gelöst (EP 1 022 481 B1).

US 5,083, 650 beschreibt die Herstellung eines Reibmateriales, wobei ein hitzebeständiges Papier als Unterlage für den eigentlichen Reibbelag dient, welches bevorzugt aus harzvernetzten Aramidfasern besteht. Auf diese Unterlage werden mehrere Schichten aus Bindemittel und Reibpartikeln aufgebracht, die durch Wärmebehandlung ausgehärtet werden.

DE 35 08 109 A1 offenbart einen Reibbelag für Trommelbremsen, bei dem die Anlagefläche des Reibbelages zum Belagträger mit Partikeln versehen ist, die härter sind als das Material der Gegenfläche des Belagträgers. Die Partikel werden in Form einer Dispersion aus Bindemittel und Partikeln aufgebracht und durch Presskräfte in beide Flächen eingedruckt.

EP 0 836 030 A1 betrifft ein Verfahren zur Herstellung eines Bremsbelages für Scheibenbremsen, bei dem Drehspäne in eine separate Kleberschicht auf der Trägerplatte eingebracht werden. Nach dem Abbinden wird das Reibmaterial aufgepresst.

DE 103 16 369 A1 beschreibt eine Trägerplatte für einen Reibbelag, auf die eine strukturierte Oberfläche als Halterungsbett für den Reibbelag aufgebracht ist. Das Halterungsbett besteht aus einer ausgehärteten Zubereitung, welche als Komponenten Alkali- oder Erdalkalisilikatlösungen und/oder Suspensionen von Aluminium-, Zirkon- oder Magnesiumoxid umfasst.

DE 100 02 261 A1 offenbart einen Bremsbelag mit einem oberflächenbeschichteten Reibbelag, um eine Absenkung des Reibwertes zu beseitigen. Die Oberflächenbeschichtung ist optisch aushärtbar und besteht aus einem Substrat auf Acrylatbasis.

GB 1 457 419 beschreibt ebenfalls einen Bremsbelag, bei dem der eigentliche Reibbelag auf der Reiboberfläche mit einer Zusammensetzung aus Bindemittel und Reibpartikeln beschichtet ist.

AT 504 820 B1 hat eine Bremsbacke zum Gegenstand, deren Funktionsfläche zumindest teilweise mit einem Reibbelag versehen ist, der eine Bindemittelmatrix aus synthetischem Harz und Reibpartikel umfasst. Die Reibpartikel weisen zumindest zum Teil einen Durchmesser auf, der größer als die Schichtdicke der Bindemittelmatrix ist.

US 2007/056816 A1 beschreibt einen Bremsbelag, bei dem zwischen Trägerplatte und Reibbelag eine Isolationssicht angeordnet ist, welche bevorzugt aus einem silikonbasierten Material besteht.

US1 890 735 A betrifft ein Verfahren zur Sicherung eines Reibbelags an einer Belagträgerplatte, bei dem die Belagträgerplatte mit Erklärungen und Vertiefungen in Form einer Zahnreihe versehen wird.

FR 1 255 831 A bezieht sich auf ein Verfahren zur Herstellung eines metallischen Trägermaterials mit strukturierter Oberfläche.

### Aufgabe

Aufgabe der vorliegenden Erfindung ist somit die Bereitstellung eines Verfahrens zur Besandung von Trommelbremsbelägen zur Erhöhung des Haftreibwertes zwischen der Innenfläche des Reibbelages und der mit dieser Fläche verbundenen Bremsbacke, welches die Nachteile aus dem Stand der Technik nicht oder in deutlich reduziertem Umfang aufweist.

Diese Aufgabe wird erfindungsgemäß durch ein Verfahren zur Besandung der einen Innenradius aufweisenden gebogenen Innenfläche von Trommelbremsbelägen gemäß Anspruch 1 gelöst.

Das Aufbringen des Klebers erfolgt durch ein Verfahren, bei dem Kleber lediglich auf die zu behandelnde Fläche gelangt und somit keine Materialverluste wie bei einem "Overspray" entstehen. Erfindungsgemäß ist ein Aufwalzen des Klebers, insbesondere mit einer Schaumstoffrolle, deren Länge (Breite der Rolle) der Breite des Reibbelages entspricht.

Da der Belag einer Trommelbremse gebogen ist und damit einen Innenradius aufweist, ist es weiterhin erfindungsgemäß bevorzugt, wenn die Rolle automatisch, beispielsweise durch einen Roboter, oder halbautomatisch mit einer geeigneten Mechanik geführt wird.

Die aufgetragene Menge an Kleber beträgt bevorzugt 0,008 bis 0,024 g/cm² beschichtete Fläche.

Als Kleber werden vorzugsweise fotoinitiiert härtende Klebstoffe, wie UV- und lichthärtende Klebstoffe, verwendet. Als Fotoinitiatoren dienen dabei insbesondere Benzophenon und sein Derivate. Insbesondere bevorzugt sind UV-härtende Klebestoffe auf Acrylatbasis.

Erfindungsgemäß geeignete Klebstoffe werden auch zur reibseitigen Lackierung und/oder Beschichtung von LKW-Scheibenbremsbelägen verwendet. Hier dient die Beschichtung oder Lackierung dazu, eine ausreichende Bremswirkung im nichteingefahrenen Zustand des Bremssystems sicherzustellen, solche Klebstoffe sind z. B. in der EP 1 022 481 B1 beschrieben.

Die bevorzugten UV-härtenden Klebstoffe, insbesondere Acrylatsysteme, sind einkomponentig, lösungsmittelfrei und kalthärtend. Allgemein funktioniert das System in der Art, dass der flüssige Klebstoff unter anderem mit Fotoinitiatoren gefüllt wird, die durch UV-Strahlung aktiviert werden und Radikale bilden, die wiederum den Aushärtprozess initiieren. Acrylate und Epoxide sind die Basis der meisten UV-Klebstoffe. Diese Kleber zeichnen sich durch sehr kurze Härtezeiten und eine Volumenkonstanz beim Härtevorgang aus.

Beim Aushärtevorgang entstehen überdies keine schädlichen Reaktionsprodukte, insbesondere keine schädlichen Gase. Die mit Kleber beschichteten und mit Reibkorn (Sand) bestreuten Beläge werden vorzugsweise bei Umgebungstemperatur und auf einem Transportband mit gleichmäßiger Geschwindigkeit in einem sogenannten UV-Tunnel unter einer UV-Lampe durchgeführt. Länge des Tunnels, Transportgeschwindigkeit und Abstand der behandelten Beläge, was insgesamt der Bestrahlungsdauer entspricht, sind so gewählt, dass eine vollständige Aushärtung des Klebers erzielt wird. Der typische Bereich für die Energieaufnahme solcher Beschichtungen liegt im Bereich von 0,2 bis 4 J/cm², vorzugsweise im Bereich von 0,5 bis 1 J/cm². Die typische Belichtungszeit mit bestimmungsgemäßem UV-Licht liegt bei 3-40 Sekunden. Die Zeit ist abhängig von der aufgetragenen Menge bzw. Schichtdicke an UV-Lack. Der bevorzugte Wellenlängenbereich der UV-Strahlung liegt dabei, in Abhängigkeit vom verwendeten Kleber, im Bereich von 180 bis 500 nm, insbesondere bei 250 bis 400 nm. Besonders bevorzugt liegt die Wellenlänge bei ca. 395 nm, dies gilt insbesondere für UV-Acrylatkleber. Damit liegt diese Wellenlänge im Grenzbereich zwischen UVA und sichtbarem Licht. Auf der einen Seite können so transparente, aber dennoch UV-lichtabsorbierende Kleber effektiv durchleuchtet bzw. gehärtet werden. Auf der anderen Seite bereitet die Lagerstabilität solcher Klebstoffe noch keine besonderen Probleme.

Das Aufbringen des Reibkorns auf die mit Kleber beschichtete Innenfläche oder Innenradius des Reibbelags erfolgt zum Beispiel durch Bestreuen der Oberfläche mit dem Reibkorn. Wichtig ist eine möglichst gleichmäßige Verteilung der Reibkörner auf der Belagoberfläche. Diese wird vorzugsweise durch eine automatisierte oder halbautomatische Vorrichtung erreicht, die einen mit dem Reibkorn gefüllten Behälter mit linearem Auslass aufweist, unter dem der Belag mit möglichst gleichmäßiger Geschwindigkeit vorbeigeführt wird. Anschließend wird das überschüssige Reibkorn, welches auch als Sand bezeichnet wird, entfernt. Dies erfolgt vorzugsweise durch einfaches Kippen des Reibbelags, wodurch das nicht vom Kleber gebundene Reibkorn von der Belagoberfläche abfällt.

Alternativ kann das Entfernen des überschüssigen Sandes auch durch Absaugen oder Abblasen erfolgen. Hierdurch wird die gewünschte Schichtdicke des Sandes erreicht, die allgemein im Bereich von 0,02 bis 0,15g/cm² und bevorzugt im Bereich von 0,04g/cm² bis 0,09g/cm² liegt. Das von der Belagoberfläche abgefallene Reibkorn wird in einem Behälter aufgefangen, wodurch Materialverluste einfach vermieden werden können.

Als Reibkorn oder Sand für die Oberflächenbesandung wird erfindungsgemäß bevorzugt Zirkonsand, der überwiegend aus dem Mineral Zirkoniumsilikat (ZrSiO₄) besteht, verwendet. Weiterhin bevorzugt sind allgemein synthetische Zirkoniumsilikate (Keramikpigmente), Metalloxide (z.B. Zinkoxid und Titandioxid), Siliciumdioxid (Quarz) oder Aluminiumoxid, wie z.B. Korund. Das Reibkorn oder Sand kann aus einer oder mehreren der genannten Substanzen bestehen, die in der Regel frei kombinierbar sind. Die Körnung des verwendeten Reibkorns liegt vorzugsweise im Bereich von 0,03 mm bis 0,25 mm.

Die bei den einzelnen Verfahrensschritten beschriebenen Merkmale sind für das Gesamtverfahren frei kombinierbar.

Trommelbremsbeläge bei denen der Innenradius oder die Innenfläche mit dem erfindungsgemäßen Beschichtungsverfahren besandet worden ist, zeichnen sich durch eine umweltfreundliche, materialeinsparende Herstellungsweise aus. Trommelbremsen, welche die erfindungsgemäßen Trommelbremsbeläge oder Reibbeläge aufweisen, sind durch eine hohe mechanische Stabilität gekennzeichnet. Selbst bei hohen Bremsmomenten wird durch die erfindungsgemäße Besandung der Innenfläche des Bremsbelages ein Abscheren des Bremsbelages von der Bremsbacke zuverlässig verhindert. Solche Trommelbremsbeläge sind daher auch für die Erstausrüstung von LKW-Trommelbremsen besonders geeignet.

## Patentansprüche

1. Verfahren zur Besandung der einen Innenradius aufweisenden gebogenen Innenfläche von Trommelbremsbelägen umfassend die Schritte
a) Aufbringen eines Klebers auf die Innenfläche eines Trommelbremsbelages,
b) Aufbringen eines Reibkorns auf die mit dem Kleber beschichtete Innenfläche des Trommelbremsbelages,
c) Entfernen des nicht vom Kleber gebundenen Reibkorns von der Oberfläche des Trommelbremsbelages und
d) Härtung der Beschichtung aus Kleber und Reibkorn, wobei der Kleber auf die Innenfläche des Trommelbremsbelages aufgewalzt wird

2. Verfahren nach Anspruch 1, **dadurch gekennzeichnet, dass** als Kleber ein fotoinitiiert härtender Kleber verwendet wird.

3. Verfahren nach Anspruch 1 oder 2, **dadurch gekennzeichnet, dass** als Kleber ein UV-härtender Kleber auf Acrylatbasis verwendet wird.

4. Verfahren nach einem der Ansprüche 1 bis 3, **dadurch gekennzeichnet, dass** der Kleber in einer Menge von 0.008 bis 0,024 g/cm² auf die Innenfläche aufgetragen wird.

5. Verfahren nach einem der Ansprüche 1 bis 4, **dadurch gekennzeichnet, dass** als Reibkorn Zirkonsand, Zirkoniumsilikate, Metalloxide, Quarz oder Korund oder deren Mischungen verwendet werden.

6. Verfahren nach einem der Ansprüche 1 bis 5, **dadurch gekennzeichnet, dass** die Körnung des verwendeten Reibkorns im Bereich von 0,03 mm bis 0,25 mm liegt.

7. Verfahren nach einem der Ansprüche 2 bis 6, **dadurch gekennzeichnet, dass** zur Härtung des Klebers UV-Strahlung im Wellenlängenbereich von 180 bis 500 nm, insbesondere im Wellenlängenbereich von 250 bis 400 nm, verwendet wird.

8. Verwendung des Verfahrens nach einem der Ansprüche 1 bis 7 zur Besandung der einen Innenradius aufweisenden gebogenen Innenfläche von Trommelbremsbelägen.

9. Verwendung nach Anspruch 8, **dadurch gekennzeichnet, dass** bei dem Verfahren nach einem der Ansprüche 1 bis 8, ein UV-Kleber auf Acrylatbasis auf die einen Innenradius aufweisende gebogene Innenfläche eines Trommelbremsbelages aufgewalzt wird.

## Claims

1. Method for sanding the curved inner surface of drum brake linings which has an inner radius, comprising the steps of:
a) applying an adhesive onto the inner surface of a brake lining,
b) applying friction particles to the inner surface of a brake lining that is coated with the adhesive,
c) removing the friction particles that are not bonded by the adhesive from the surface of the drum brake lining, and
d) curing the coating which consists of the adhesive and the friction particles, wherein the adhesive is rolled onto the inner surface of the drum brake lining.

2. Method according to claim 1, **characterized in that** an adhesive that is cured in a photoinitiated manner is used as the adhesive.

3. Method according to claim 1 or 2, **characterized in that** an acrylic-based UV-curable adhesive is used as the adhesive.

4. Method according to any of the claims 1 to 3, **characterized in that** the adhesive is applied to the inner surface in an amount of 0.008 to 0.024 g/cm².

5. Method according to any of the claims 1 to 4, **characterized in that** zircon sand, zirconium silicates, metal oxides, quartz or corundum or mixtures thereof are used as the friction particles.

6. Method according to any of the claims 1 to 5, **characterized in that** the grain size of the used friction particles is in the range of 0.03 mm to 0.25 mm.

7. Method according to any of the claims 2 to 6, **characterized in that** UV radiation in the wave length range of 180 to 500 nm, in particular in the wave length range of 250 to 400 nm, is used for curing the adhesive.

8. Use of a method according to any of the claims 1 to 7 for sanding the curved inner surface of drum brake linings which has an inner radius.

9. Use according to claim 8, **characterized in that**, in a method according to any of the claims 1 to 8, an acrylic-based UV-curable adhesive is applied to the curved inner surface of drum brake linings which has an inner radius.

## Revendications

1. Procédé de sablage de la surface intérieure courbe, présentant un rayon intérieur, de garnitures de frein à tambour, comprenant les étapes suivantes :
a) application d'une colle sur la surface intérieure d'une garniture de frein à tambour,
b) application d'un grain abrasif sur la surface intérieure, revêtue de colle, de la garniture de frein à tambour,
c) enlèvement du grain abrasif non lié à la colle de la surface de la garniture de frein à tambour et
d) durcissement du revêtement constitué de la colle et du grain abrasif, la colle étant laminée sur la surface intérieure de la garniture de frein à tambour.

2. Procédé selon la revendication 1, **caractérisé en ce qu'**une colle à durcissement photo-induit est utilisée en tant que colle.

3. Procédé selon la revendication 1 ou 2, **caractérisé en ce qu'**une colle à durcissement aux UV à base d'acrylate est utilisée en tant que colle.

4. Procédé selon l'une quelconque des revendications 1 à 3, **caractérisé en ce que** la colle est appliquée en une quantité de 0,008 à 0,024 g/cm² sur la surface intérieure.

5. Procédé selon l'une quelconque des revendications 1 à 4, **caractérisé en ce que** du sable de zirconium, des silicates de zirconium, des oxydes métalliques, du quartz ou du corindon ou leurs mélanges sont utilisés en tant que grain abrasif.

6. Procédé selon l'une quelconque des revendications 1 à 5, **caractérisé en ce que** la granulométrie du grain abrasif utilisé est comprise dans une plage de 0,03 mm à 0,25 mm.

7. Procédé selon l'une quelconque des revendications 2 à 6, **caractérisé en ce que** pour le durcissement de la colle, un rayonnement UV dans la plage de longueur d'onde de 180 à 500 nm, en particulier dans la plage de longueur d'onde de 250 à 400 nm est utilisé.

8. Utilisation du procédé selon l'une quelconque des revendications 1 à 7 pour le sablage de la surface intérieure courbe, présentant un rayon intérieur, de garnitures de frein à tambour.

9. Utilisation selon la revendication 8, **caractérisée en ce que** dans le procédé selon l'une quelconque des revendications 1 à 8, une colle UV à base d'acrylate est laminée sur la surface intérieure courbe, présentant un rayon intérieur, d'une garniture de frein à tambour.
